Europäisches Patentamt

European Patent Office

Office européen des brevets

(11) Veröffentlichungsnummer: **0 508 047 A1**

## (12) EUROPÄISCHE PATENTANMELDUNG

(21) Anmeldenummer: **92101305.8**

(22) Anmeldetag: **28.01.92**

(51) Int. Cl.5: **B01D  21/06**

(30) Priorität: **11.04.91 DE 4111760**

(43) Veröffentlichungstag der Anmeldung:
**14.10.92 Patentblatt  92/42**

(84) Benannte Vertragsstaaten:
**AT BE CH DE DK ES FR GB GR IT LI LU NL PT
SE**

(71) Anmelder: **DORR-OLIVER INCORPORATED
612 Wheeler's Farm Road, P.O.Box 3819
Milford Connecticut 06460-8719(US)**

(72) Erfinder: **Becker, Klaus-Peter, Dipl.-Ing.
Am Zollstock 14
W-6200 Wiesbaden(DE)**

(74) Vertreter: **Weber, Dieter, Dr. et al
Dr. Dieter Weber, Dipl.-Phys. Klaus Seiffert,
Dr. Winfried Lieke, Patentanwälte,
Gustav-Freytag-Strasse 25, Postfach 6145
W-6200 Wiesbaden 1(DE)**

(54) **Klärbecken für die Abwasserreinigung.**

(57) Ein Klärbecken für die Abwasserreinigung unter Abtrennung suspendierter Feststoffe von dem Wasser unter der Schwerkraft mit darin um eine senkrechte Mittelachse (10) drehbaren Armen (2), die an ihrem der Mittelachse zugewandten Ende mit einer Zuführleitung (14) für ungeklärtes Abwasser in Verbindung stehen und entlang ihrer Länge im Abstand voneinander Austrittsöffnungen (3) aufweisen, und mit an wenigstens einem Teil der Arme (2) befestigten Krählwerkzeugen (4) ist dadurch gekennzeichnet, daß die Austrittsöffnungen (3) an den drehbaren Armen (2) vom Beckenboden (6) einen um mindestens 25 cm größeren Abstand als die Unterkanten der Krählwerkzeuge (4) besitzen.

Fig. 1

EP 0 508 047 A1

Klärbecken für die Abwasserreinigung unter Abtrennung suspendierter Feststoffe von dem Wasser sind in unterschiedlichster Ausbildung bekannt. Insbesondere werden solche Klärbecken der hier beschriebenen Gattung als dem Belebungsbecken nachgeschaltete Nachklärbecken im Belebtschlammverfahren verwendet.

Beispielsweise aus der US-PS 4 263 137 sind derartige Klärbecken bekannt, die um eine senkrechte Mittelachse drehbare Arme aufweisen, die zum Teil Krählwerkzeuge und zum Teil Austrittsöffnungen für ungeklärtes Abwasser aufweisen. Die Arme mit den Austrittsöffnungen stehen an ihrem der Mittelachse zugewandten Ende mit einer Zuführleitung für ungeklärtes Abwasser in Verbindung.

Die bekannte Zuführung des ungeklärten Abwassers über drehbare Arme in der Nähe des Beckenbodens ergibt eine gute Verteilung des Zulaufs über den gesamten Beckenquerschnitt und eine für die Klärwirkung vorteilhafte vertikale Durchströmung des Klärbeckens. Die aus der US-PS 4 263 137 bekannte Vorrichtung hat aber den Nachteil, daß der durch die Austrittsöffnungen in das Becken in der Nähe von dessen Boden gelangende Zulauf Turbulenzen im Absetzbereich erzeugt und dabei sich absetzenden Schlamm hochwirbelt, was die Klärwirkung des Beckens verschlechtert.

Die der Erfindung zugrundeliegende Aufgabe bestand somit darin, ein Klärbecken mit gegenüber dem Stand der Technik verbesserter Klärwirkung zu bekommen. Insbesondere bestand die Aufgabe darin, ein Klärbecken zu erhalten, das mit möglichst großer Steighöhe vertikal von dem zu klärenden Abwasser durchströmt wird, ohne daß in der Absetzzone am Beckenboden Turbulenzen entstehen.

Das erfindungsgemäße Klärbecken für die Abwasserreinigung unter Abtrennung suspendierter Feststoffe von dem Wasser unter der Schwerkraft mit darin um eine senkrechte Mittelachse drehbaren Armen, die an ihrem der Mittelachse zugewandten Ende mit einer Zuführleitung für ungeklärtes Abwasser in Verbindung stehen und entlang ihrer Länge im Abstand voneinander Austrittsöffnungen aufweisen, und mit an wenigstens einem Teil der Arme befestigten Krählwerkzeugen ist dadurch gekennzeichnet, daß die Austrittsöffnungen an den drehbaren Armen vom Beckenboden einen um mindestens 25 cm größeren Abstand als die die Unterkanten der Krählwerkzeuge besitzen. Vorzugsweise unterscheidet sich dieser Abstand um 25 bis 100, besonders um 30 bis 70 cm.

Der Vorteil eines Klärbeckens mit den erfindungsgemäßen Merkmalen besteht darin, daß der Zulauf zu dem Klärbecken in der Nähe des Beckenbodens erfolgt, so daß das Becken vertikal durchströmt wird und man eine große Steighöhe für das zu klärende Wasser bekommt, während andererseits im unmittelbaren Bodenbereich, der als Absetzzone für den Schlamm dient, durch die Einleitung von zu klärendem Abwasser keine Turbulenzen erzeugt werden. Auf diese Weise wird insgesamt die Klärwirkung des Beckens verbessert.

Die Realisierung des Erfindungsgedankens ist auf zwei grundsätzlichen Wegen möglich.

Der erste Weg besteht darin, daß man in dem Klärbecken getrennte Arme für den Abwasserzulauf einerseits und die Krählwerkzeuge andererseits vorsieht. In diesem Fall kann man den Unterschied im Zulaufniveau und Krählwerkzeugniveau entweder auf die Weise erreichen, daß man die Zulaufarme mit den Austrittsöffnungen in einem größeren Abstand vom Beckenboden als die Krählarme anordne<. Stattdessen kann man alle Arme auch im wesentlichen auf gleicher Höhe anordnen und die Krählwerkzeuge an Abstandshaltern, etwa in der Art von Stielen, an den Krählarmen befestigen oder die Austrittsöffnungen der Zulaufarme von diesen durch an ihren angesetzten, nach oben führenden Rohrstutzen beabstanden, so daß die Austrittsöffnungen der Zulaufarme einen größeren Abstand vom Beckenboden als die Unterkanten der Krählwerkzeuge besitzen.

Wenn hier von Krählwerkzeugen die Rede ist, so kann es sich um beliebige bekannte Ausbildungen handeln. Im Regelfall wird man als Krählwerkzeuge Krählschaufeln vorsehen. Solche sind beispielsweise in Fig. 1 der US-PS 4 263 137, jedoch ohne Abstandshalter und ohne Niveauverschiebung zu den Austrittsöffnungen der Zulaufrohre, gezeigt.

Statt getrennter Arme für den Zulauf einerseits und die Befestigung der Krählwerkzeuge andererseits können auch alle um die Mittelachse drehbaren Arme mit beiden Funktionen ausgestattet sein und die Form von Verteilerrohren mit Austrittsöffnungen und daran befestigten Krählwerkzeugen sein. In diesem Fall sind vorzugsweise die Krählwerkzeuge, wie Krählschaufeln, an Abstandshaltern an den Armen befestigt, die die Unterkanten der Krählwerkzeuge in unmittelbare Nähe des Beckenbodens bringen. Stattdessen ist es aber auch möglich, die Austrittsöffnungen mit senkrecht oder schräg nach oben führenden Anschlußröhren zu versehen, so daß der Zulauf das Becken am Ende dieser Röhren und damit in größerer Entfernung vom Beckenboden als die Unterkante der Krählwerkzeuge erfolgt.

Die Austrittsöffnungen für den Zulauf an ungeklärtem Abwasser können an den entsprechenden Armen so vorgesehen sein, daß sie in das Becken seitlich von den Armen oder nach oben münden. Wenn die Austrittsöffnungen seitlich münden, wie es etwa in der US-PS 4 263 137 gezeigt ist, münden sie in Drehrichtung der Arme an deren Rückseite.

Die Zufuhr des ungeklärten Abwassers zu der Zuführleitung, mit welcher die Arme mit den Austrittsöffnungen in Verbindung stehen, kann entweder von unten oder von oben erfolgen. Das heißt, das zu klärende Abwasser kann in die Mittelachse von unten oder oben eintreten. Beim Zulaufeintritt von unten müssen zwischen der festliegenden unterirdischen Zulaufleitung und den drehbeweglichen Teilen an sich bekannte Dichtungselemente vorgesehen sein, um zu erreichen, daß das zulaufende ungeklärte Abwasser im wesentlichen vollständig in die Verteilerarme oder Zulaufarme eintritt.

In vorteilhafter Ausbildung des Erfindungsgedankens können an wenigstens einem Teil der drehbaren Arme Schlammabzugseinrichtungen vorgesehenen sein, die Schlamm aus der Absetzzone in Bodennähe absaugen und aus dem Becken entfernen. Zweckmäßig sind solche Schlammabzugseinrichtungen nur an den Armen mit Krähleinrichtungen vorgesehen. Diese Schlammabzugseinrichtungen können aus mehreren Einzelrohren bestehen, deren Mündungen in Abstand voneinander in Bodennähe an dem betreffenden Arm angeordnet sind. Stattdessen können aber auch im Falle getrennter Zulaufarme und Krählarme die Krählarme als hohle Rohre ausgebildet sein, an denen sich die Schlammabzugsöffnungen befinden und über die der Schlamm abgezogen wird.

Im allgemeinen reichen vier um die Mittelachse drehbare Arme aus, von denen entweder zwei als Zulaufarme und zwei als Krählarme ausgebildet sind oder die alle vier beide Funktionen entsprechend den obigen Ausführungen haben. Selbstverständlich ist der Erfindungsgedanke aber nicht auf die Anordnung von vier Armen beschränkt. Stattdessen können auch zwei, sechs oder mehr Arme vorgesehen sein.

Nach einer weiteren bevorzugten Ausführungsform der Erfindung sind Einrichtungen zur Regelung der Umlaufgeschwindigkeit der Arme in Abhängigkeit von der Abwasserzulaufmenge vorgesehen. Auf die Weise kann man den Durchsatz durch das Klärbecken schwankenden Zulaufmengen anpassen.

Die Form des Klärbeckens selbst kann in bekannter Weise unterschiedlich sein, wie kreisrund, mit quadratischem oder rechteckigem oder sonstigem unrunden Querschnitt. Im Falle von Klärbecken mit quadratischem Querschnitt können die Krählwerkzeuge spezielle Einrichtungen zum Räumen der Beckenecken haben, wie beispielsweise in der US-PS 4 043 920 beschrieben ist.

Der Beckenboden ist gewöhnlich zur Mittelachse hin geneigt, so daß die Krählarme gewöhnlich entsprechend geneigt sind, um parallel zum Beckenboden ausgerichtet zu sein.

Am Klärbeckenboden kann weiterhin eine Vertiefung zum Sammeln von Schlamm vorgesehen sein, wobei der Schlamm aus dieser Vertiefung mit Hilfe einer Pumpe abgezogen werden kann.

Die Klärbecken nach der Erfindung können einzeln oder zu mehreren angeordnet sein, wobei im Falle einer Anordnung als Gruppe die Becken hintereinander oder parallel zueinander geschaltet sein können.

In der Zeichnung bedeuten

Fig. 1 einen senkrechten Schnitt durch eine erste Ausführungsform eines Klärbeckens nach der Erfindung entlang der Linie A-B in Fig. 2,

Fig. 2 eine Draufsicht auf das Klärbecken gemäß Fig. 1,

Fig. 3 einen senkrechten Schnitt durch eine andere Ausführungsform eines Klärbeckens nach der Erfindung entlang der Linie A-B in Fig. 4 und

Fig. 4 eine Draufsicht auf das Klärbecken gemäß Fig. 3.

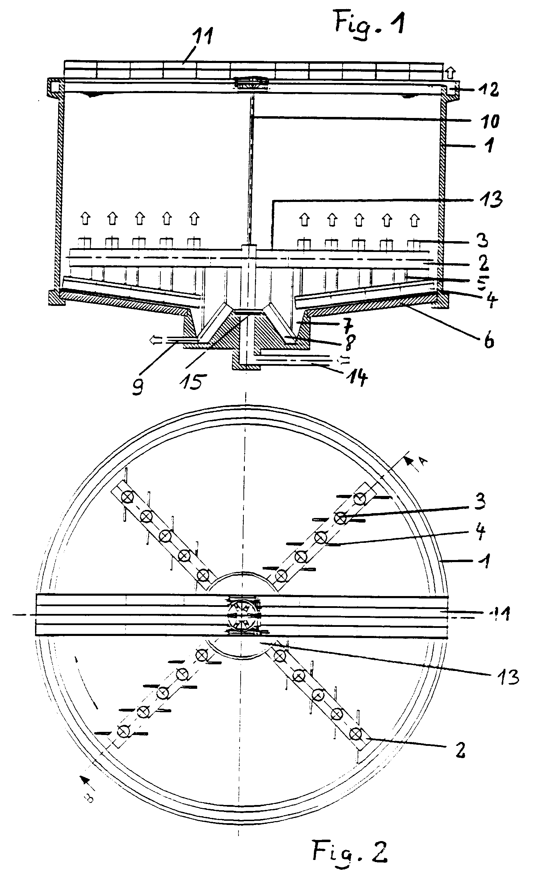

Bei der in den Fig. 1 und 2 dargestellten Ausführungsform enthält das Klärbecken 1 vier untereinander gleiche Arme 2 in Form von an ihren freien Enden verschlossenen Rohren mit nach oben gerichteten Austrittsöffnungen 3 in Form offener Rohrstutzen. An der Unterseite der Arme 2 sind über Abstandshalter Krählschaufeln 4 befestigt, die mit ihrer Unterkante in geringem Abstand über dem nach innen geneigten Beckenboden 6 liegen.

Am Beckenboden 6 befindet sich im Mittelbereich eine ringförmnige Vertiefung 7 ebenfalls mit darin gelagerten, über Abstandshalter an den Armen 2 befestigten Krählschaufeln 8. In die ringförmige Vertiefung 7 mündet eine Schlammabzugsleitung 9, über welche der sich in der ringförmigen Vertiefung 7 ansammelnde Schlamm abgezogen wird.

Die Arme 2 sind um die Mittelachse 10 drehbar gelagert. Die Mittelachse 10 ist am oberen Ende an der Brück 11 befestigt. Am oberen Ende des Klärbeckens 1 befestigt sich eine ringsum laufende Überlaufrinne 12, von der das geklärte Wasser abgenommen wird.

Die rohrförmigen Arme 2 münden mit ihren inneren offenen Ende in einen Sammelraum 13, der seinerseits mit der Zuführleitung 14 für ungeklärtes Abwasser über eine Dichtverbindung 15 in Verbindung steht.

Beim Arbeiten der Vorrichtung gelangt das zu klärende Abwasser über die Zuführleitung 14, den Sammelraum 13, die Arme 2 und die Austrittsöffnungen 3 in das Klärbecken 1 und wird durch die Drehung der Arme 2 in dem Klärbecken gleichmäßig verteilt. Der Inhalt des Klärbeckens wird vertikal durchströmt, wobei sich die suspendierten Feststoffe absetzen und das geklärte Abwasser in die Überlaufrinne 12 gelangt und von dort entnommen wird. Die abgesetzten Feststoffe werden mit Hilfe der Krählschaufeln 4 in die ringförmige Vertiefung 7 geschoben und werden von dort über die Schlammabzugsleitung 9 abgeführt.

Da die Austrittsöffnungen 3 merklich höher als die Unterkanten der Krählschaufeln 4 liegen, bekommt man in dem Klärbecken eine große Steighöhe mit vertikaler Durchströmung, ohne daß die Absetzzone am Beckenboden durch Turbulenzen gestört wird. Dies verbessert in überraschender Weise die Klärwirkung des erfindungsgemäßen Klärbeckens.

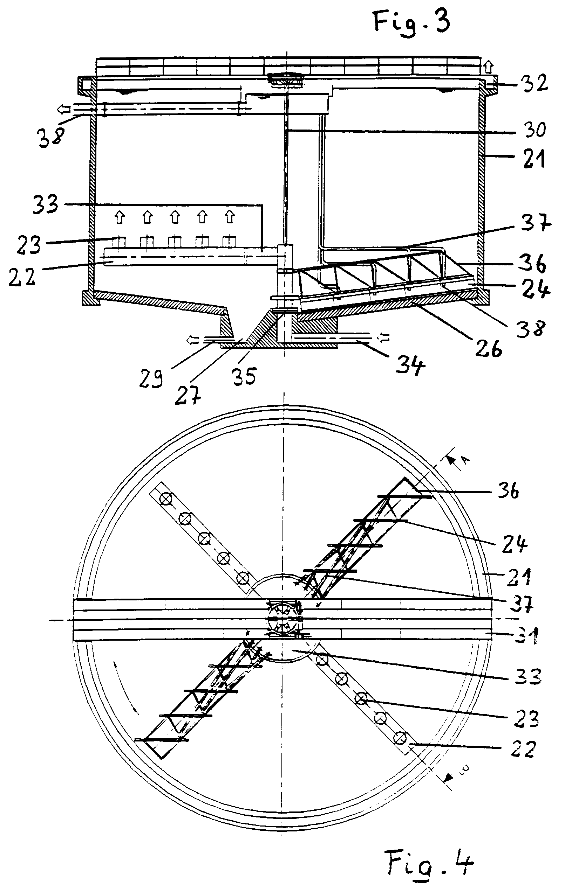

Die in den Fig. 3 und 4 dargestellte Ausführungsform eines Klärbeckens nach der Erfindung unterscheidet sich von der gemäß den Fig. 1 und 2 dadurch, daß drehbar um die Mittelachse 30 jeweils zwei einander gegenüberliegende Arme 22 und 36 mit unterschiedlicher Funktion und in unterschiedlicher Höhe angeordnet sind. Die Arme 22 besitzen Austrittsöffnungen 23 wiederum in Form von senkrechten Rohrstutzen und münden in einen Sammelraum 33, der seinerseits in Verbindung mit der Zuführleitung 34 für ungeklärtes Abwasser steht.

Die Arme 36 dagegen sind Krählarme mit direkt daran befestigten Krählschaufeln 24. Die Krählarme 36 sind der Neigung des Beckenbodens 26 entsprechend geneigt. An den Krählarmen 36 sind Schlammabzugsleitungen 37 befestigt, deren Öffnungen 38 in geringem Abstand oberhalb des Beckensbodens 26 münden. Die Schlammabzugsleitungen 37 drehen sich also mit den Krählarmen 36. Der von ihnen abgezogene Rückführschlamm gelangt über die Rückführschlammleitung 38 aus dem Klärbecken.

Die Mittelachse 30, um die sich die Arme 22 und 36 drehen, ist am oberen Ende wiederum an der Brücke 31 befestigt. Der Zulauf von ungeklärtem Abwasser erfolgt über die Zuführleitung 34, den Sammelraum 33, die rohrförmigen Zulaufarme 22 und die Austrittsöffnungen 23. Der abgesetzte schwere Überschußschlamm wird von den Krählschaufeln 34 in die Vertiefung 27 geschoben und von dort über die Schlammabzugsleitung 29 entfernt. Das geklärte Wasser geht am oberen Ende des Klärbecken 21 in die Überlaufrinne 32 und wird aus dieser abgenommen.

Alternativ könnte das zu klärende Abwasser von oben der Zuführleitung zugeführt werden. Das Klärbecken könnte statt eines runden Querschnittes quadratischen Querschnitt haben. Im übrigen könnten übliche und bekannte Formgebungen und Zusatzeinrichtungen vorgesehen sein.

## Patentansprüche

1. Klärbecken für die Abwasserreinigung unter Abtrennung suspendierter Feststoffe von dem Wasser unter der Schwerkraft mit darin um eine senkrechte Mittelachse (10, 30) drehbaren Armen (2, 22, 36), die an ihrem der Mittelachse zugewandten Ende mit einer Zuführleitung (14, 34) für ungeklärtes Abwasser in Verbindung stehen und entlang ihrer Länge im Abstand voneinander Austrittsöffnungen (3, 23) aufweisen, und mit an wenigstens einem Teil der Arme (2, 22) befestigten Krählwerkzeugen (4, 24), **dadurch gekennzeichnet**, daß die Austrittsöffnungen (3, 23) an den drehbaren Armen (2, 22) vom Beckenboden (6, 26) einen um mindestens 25 cm größeren Abstand als die Unterkanten der Krählwerkzeuge (4, 24) besitzen.

2. Klärbecken nach Anspruch 1, **dadurch gekennzeichnet**, daß es getrennte Arme (22, 36) mit Austrittsöffnungen (23) für ungeklärtes Abwasser einerseits und mit Krählwerkzeugen (24) andererseits enthält.

3. Klärbecken nach Anspruch 2, **dadurch gekennzeichnet**, daß die Arme (22) mit den Austrittsöffnungen (23) in größerem Abstand vom Beckenboden (26) als die Arme (36) mit den Krählwerkzeugen (24) angeordnet sind.

4. Klärbecken nach Anspruch 2, **dadurch gekennzeichnet**, daß die Arme mit den Austrittsöffnungen und die Arme mit den Krählwerkzeugen etwa im gleichen Abstand vom Beckenboden angeordnet sind und die Krählwerkzeuge über Abstandshalter an den letzteren Armen befestigt sind.

5. Klärbecken nach einem der Ansprüche 2 bis 4, **dadurch gekennzeichnet**, daß an den Armen (36) mit den Krählwerkzeugen (24) Schlammabzugsleitungen (37) angeordnet sind.

6. Klärbecken nach Anspruch 1, **dadurch gekennzeichnet**, daß alle Arme (2) sowohl Austrittsöffnungen (3) als auch Krählwerkzeuge (4) besitzen und letzere über Abstandshalter (5) an den Armen (2) befestigt sind.

7. Klärbecken nach einem der Ansprüche 1 bis 6, **dadurch gekennzeichnet**, daß die Austrittsöffnungen (3, 23) nach oben oder zu Seite hin münden.

8. Klärbecken nach einem der Ansprüche 1 bis 7, **dadurch gekennzeichnet**, daß Einrichtungen zur Regelung der Umlaufgeschwindigkeit der Arme (2, 22, 36) in Abhängigkeit von der Abwasserzulaufmenge vorgesehen sind.

**9.** Klärbecken nach einem der Ansprüche 1 bis 8, **dadurch gekennzeichnet**, daß der Beckenboden (6, 26) zur Mittelachse hin geneigt ist und die Arme mit den Krählwerkzeugen (36) eine entsprechende Neigung besitzen oder die Abstandshalter (5) zwischen den Armen (2) und den Krählwerkzeugen (4) zur Mittelachse (10) hin zunehmend länger sind.

**10.** Klärbecken nach einem der Ansprüche 1 bis 9, **dadurch gekennzeichnet**, daß die Zuführleitung für ungeklärtes Abwasser von unten in das Klärbecken eindringt.

**11.** Vorrichtung nach einem der Ansprüche 1 bis 10, **daurch gekennzeichnet**, daß die Austrittsöffnungen (3, 23) von den Armen (2, 22) aus nach oben ragende Rohrstutzen oder Düsen sind.

**12.** Vorrichtung nach einem der Ansprüche 1 bis 11, **dadurch gekennzeichnet**, daß die Austrittsöffnungen (3, 23) einen um 25 bis 120, vorzugsweise 30 bis 70 cm größeren Abstand vom Beckenboden als die Unterkanten der Krählwerkezuge haben.

Fig. 1

Fig. 2

Fig.3

Fig.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | US-A-2 525 842 (R. B. THOMPSON)<br>* das ganze Dokument *<br>--- | 1 | B01D21/06 |
| A | FR-A-1 163 132 (DORR-OLLIVER)<br>* Seite 4, rechte Spalte; Abbildung 5 *<br>--- | 1 | |
| A | GB-A-1 039 146 (THE EIMCO CORP.)<br>* das ganze Dokument *<br>--- | 1 | |
| A | US-A-2 263 167 (J. V. N. DORR ET AL.)<br>* das ganze Dokument *<br>--- | 1 | |
| A | US-A-2 267 516 (H. F. ADAMS)<br>--- | | |
| A | DE-A-2 102 646 (DUISBURGER KUPFERHÜTTE)<br><br>----- | | |
| | | | **RECHERCHIERTE SACHGEBIETE (Int. Cl.5 )**<br><br>B01D<br>B01B |

Der vorliegende Recherchenbericht wurde für alle Patentansprüche erstellt

| Recherchenort | Abschlußdatum der Recherche | Prüfer |
|---|---|---|
| DEN HAAG | 14 JULI 1992 | DEVISME F. R. |

**KATEGORIE DER GENANNTEN DOKUMENTE**

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes
    Dokument

EPO FORM 1503 03.82 (P0403)